# EUROPEAN PATENT APPLICATION

(11) **EP 4 831 572 A1**
(43) Date of publication of application: **28.10.2026**
(21) Application number: 24922013.8
(22) Date of filing: 10.12.2024
(51) Int. Cl.: F27D 21/00, C21B 7/24, F27B 1/28, G01F 23/24

(54) **METHOD FOR MEASURING LEVEL OF MOLTEN MATTER INSIDE VERTICAL FURNACE, AND MEASURING DEVICE**

(30) Priority: 02.02.2024 JP 2024014569
(71) Applicant: JFE Steel Corporation, Tokyo 100-0011 (JP)
(72) Inventor: KURODA, Minori, Tokyo 100-0011 (JP); ITO, Tomohiko, Tokyo 100-0011 (JP); ICHIKAWA, Takuto, Tokyo 100-0011 (JP); KIMURA, Yuki, Tokyo 100-0011 (JP)
(74) Representative: Hoffmann Eitle
(86) International application number: PCT/JP2024/043624
(87) International publication number: WO 2025/164095

(57) **Abstract**

A measurement method for a melt level in a shaft furnace according to the present invention includes installing a plurality of measurement electrode groups each including at least four electrodes arranged in a height direction of a shaft furnace, in a circumferential direction of the shaft furnace; in each of the measurement electrode groups, applying a current to uppermost and lowermost two electrodes as current application electrodes and measuring a voltage generated between at least two electrodes excluding the current application electrodes as voltage detection electrodes; and measuring a melt level in the circumferential direction in the shaft furnace by using the measured voltage or a change in electric resistance calculated from the voltage, in which during application of a current to a certain measurement electrode group, a current is not applied to another measurement electrode group.

## Description

### Field

The present invention relates to a measurement method and a measurement apparatus for a melt level in a shaft furnace.

### Background

A shaft furnace is a generic term for furnaces in which raw materials are charged from a furnace top and molten metal is removed from a lower part of the furnace. Among the shaft furnaces, blast furnaces used in the steel industry are located at the very beginning of the process in steel plants, and therefore, a technique for stabilizing the operation is regarded as important. Specifically, increase in height (melt level) of hot metal and molten slag stored in the blast furnace leads to an unstable condition of furnace, and may result in reduction in production. Furthermore, it is pointed out that there is a deviation in melt level in the circumferential direction of the blast furnace, and measurement of a local change in melt level is also required. For this reason, measurement of the melt level in the blast furnace is an indispensable technique for performing stable operation. From such a background, a method of measuring a melt level in a smelting furnace is proposed in Patent Literature 1. Specifically, in the method described in Patent Literature 1, a plurality of measurement electrode groups each including at least four electrodes linearly arranged in a height direction of the smelting furnace are installed first in a circumferential direction of the smelting furnace. Next, in each of the measurement electrode groups, a current is applied to uppermost and lowermost two electrodes as current application electrodes, and a voltage generated between voltage detection electrodes is measured using at least two electrodes excluding the current application electrodes, as the voltage detection electrodes. Then, the measured voltage or a change in electric resistance calculated from the voltage is used to measure the melt level in the circumferential direction in the smelting furnace. Furthermore, in this method, the current is applied so that the timings of rise and fall of the applied currents match each other for the measurement electrode groups. Each of the measurement electrode groups measures the melt level in a limited range in the circumferential direction in the smelting furnace.

### Citation List

### Patent Literature

Patent Literature 1: JP 2010-138437 A

### Summary

### Technical Problem

In the method described in Patent Literature 1, when the melt level is measured by the plurality of measurement electrode groups simultaneously, applied currents interfere with each other between the measurement electrode groups, and a larger current than expected may flow in a furnace body. As a result, a voltage higher than expected is measured by the voltage detection electrodes, and accuracy in measurement of the melt level may deteriorate. Furthermore, it may also be difficult to recognize a difference in tendency of voltages of the measurement electrode groups, which should be originally measured.

The present invention has been made in view of the above problems, and an object of the present invention is to provide a measurement method and a measurement apparatus for a melt level in a shaft furnace that enable, even when a plurality of measurement electrode groups are installed in a circumferential direction of the furnace to measure the melt level, accurately measuring a melt level by using the measurement electrode groups.

### Solution to Problem

A measurement method for a melt level in a shaft furnace according to the present invention, includes: installing a plurality of measurement electrode groups each including at least four electrodes arranged in a height direction of a shaft furnace, in a circumferential direction of the shaft furnace; in each of the measurement electrode groups, applying a current to uppermost and lowermost two electrodes as current application electrodes, and measuring a voltage generated between at least two electrodes excluding the current application electrodes as voltage detection electrodes; and measuring a melt level in the circumferential direction in the shaft furnace by using the measured voltage or a change in electric resistance calculated from the voltage, wherein during application of a current to a certain measurement electrode group, a current is not applied to another measurement electrode group.

A measurement apparatus for a melt level in a shaft furnace according to the present invention, includes: a plurality of measurement electrode groups that are installed in a circumferential direction of the shaft furnace, and each of which includes at least four electrodes arranged in a height direction of a shaft furnace, the apparatus, for each of the measurement electrode groups, applying a current to uppermost and lowermost two electrodes as current application electrodes and measuring a voltage generated between at least two electrodes excluding the current application electrodes as voltage detection electrodes, and measuring a melt level in the circumferential direction in the shaft furnace by using the measured voltage or a change in electric resistance calculated from the voltage, wherein during application of a current to a certain measurement electrode group, a current is not applied to another measurement electrode group.

A rectangular wave signal or a pseudo random signal is preferably used as a current signal to be applied to each of the current application electrodes.

It is preferable that a measurement electrode group to which a current is not applied is located within a range of a predetermined distance from a measurement electrode group to which a current is applied.

The predetermined distance is preferably determined by a current distribution analysis.

It is preferable that a current is applied to a measurement electrode group located at a position whose distance is larger than the predetermined distance, simultaneously with the measurement electrode group to which a current is applied.

### Advantageous Effects of Invention

According to the measurement method and the measurement apparatus for a melt level in a shaft furnace according to the present invention, even when the plurality of measurement electrode groups are installed in the circumferential direction of the furnace to measure the melt level, the melt level can be accurately measured by the measurement electrode groups.

### Brief Description of Drawings

[FIG. 1] FIG. 1 is a schematic diagram illustrating an overall configuration of a measurement apparatus for a melt level in a shaft furnace according to an embodiment of the present invention.
[FIG. 2] FIG. 2 is a diagram illustrating over-detection of voltage due to current interference.
[FIG. 3] FIG. 3 is a diagram illustrating an example of a current distribution analysis result.
[FIG. 4] FIG. 4 is a diagram illustrating installation positions of measurement electrode groups in an example.
[FIG. 5] FIG. 5 is a diagram illustrating timing of applying a current to each of the measurement electrode groups in an example.
[FIG. 6] FIG. 6 is a diagram illustrating an exemplary detected voltage waveform in an example.
[FIG. 7] FIG. 7 is a diagram illustrating a change in electric resistance when current control of the present invention is performed and when the current control is not performed.

### Description of Embodiments

Hereinafter, a measurement method and a measurement apparatus for a melt level in a shaft furnace according to an embodiment of the present invention will be described with reference to the drawings.

### [Overall configuration]

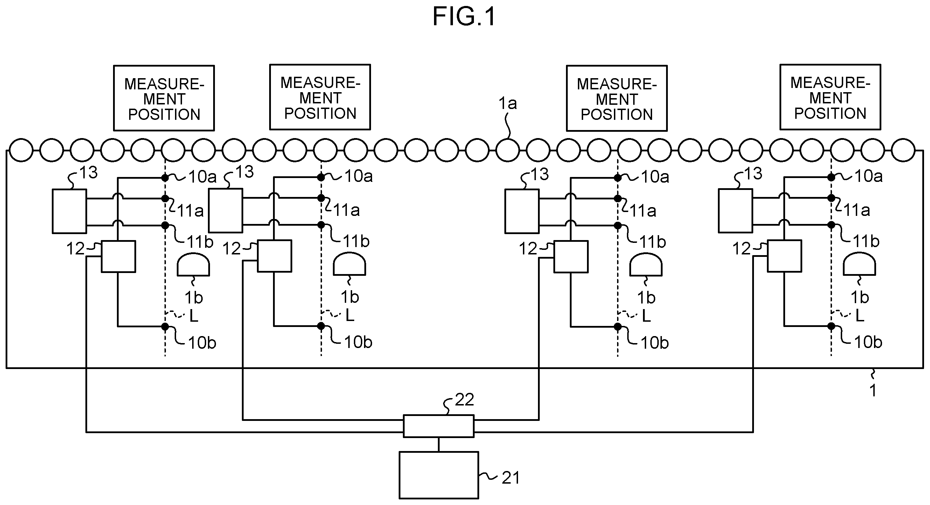

First, an overall configuration of the measurement apparatus for a melt level in a shaft furnace according to an embodiment of the present invention will be described with reference to FIG. 1.

FIG. 1 is a schematic diagram illustrating the overall configuration of the measurement apparatus for a melt level in a shaft furnace according to an embodiment of the present invention. Note that in the present embodiment, the present invention is applied to a blast furnace which is a type of a shaft furnace, and FIG. 1 illustrates a state in which a furnace body 1 of the blast furnace is developed. Furthermore, in FIG. 1, reference numeral 1a denotes a throat, and reference numeral 1b denotes a taphole.

As illustrated in FIG. 1, the measurement apparatus for a melt level in a shaft furnace according to an embodiment of the present invention includes a measurement electrode group including at least four electrodes linearly arranged in a height direction of the furnace body 1 for each of a plurality of measurement positions specified in a circumferential direction of the furnace body 1. In the present embodiment, current application electrodes 10a and 10b and voltage detection electrodes 11a and 11b are provided for each measurement position, as the measurement electrode group. Furthermore, each of the electrodes is installed so that a tip end portion thereof makes contact with a surface of a carbon brick on a furnace outer side constituting a lower part of the furnace body 1. Furthermore, each electrode is installed so that a straight line L formed by a plurality of the electrodes installed at each measurement position is parallel to a straight line L formed by a plurality of the electrodes installed at another measurement position, and installation heights of the electrodes are aligned between the measurement positions. The installation positions of the current application electrodes 10a and 10b and the voltage detection electrodes 11a and 11b will be described later in detail.

In the present embodiment, a current generator 12 is connected to the current application electrodes 10a and 10b, and a recording device 13 is connected to the voltage detection electrodes 11a and 11b. The recording device 13 includes, for example, an A/D converter and an information processing device such as a computer. Upon measurement of the melt level in the furnace at each measurement position, a signal generation device 21 connected to the current generator 12 outputs a rectangular wave signal or a pseudo random signal. This configuration makes it possible to apply signals the temporal changes of which coincide with one another to the current application electrodes 10a and 10b at the respective measurement positions.

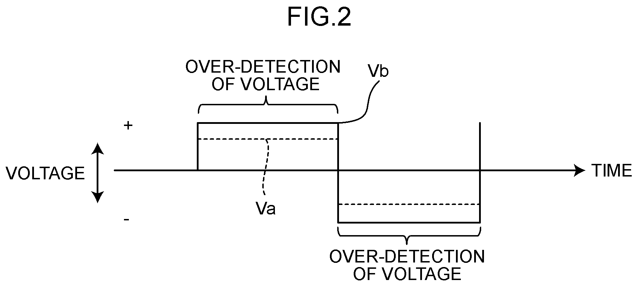

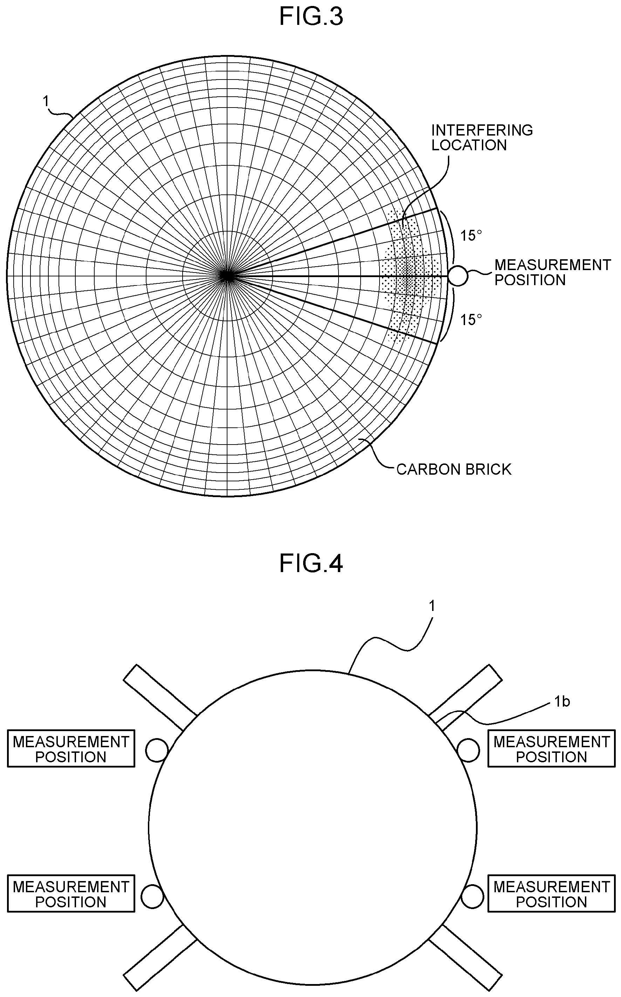

Here, when the melt level is simultaneously measured using the measurement electrode groups at the plurality of measurement positions, interference between applied currents to the measurement electrode groups at different measurement positions may cause a larger amount of current than expected, as illustrated in FIG. 2, and a voltage (voltage signal Vb) higher than an expected voltage (voltage signal Va) may be detected. In one aspect, the presence or absence of generation of the interference between the applied currents changes depending on the size of an interval between the measurement electrode groups. Here, the interference between the applied currents means a sneak current from another measurement electrode group, and when the interval between the measurement electrode groups has a value smaller than a specific value, a voltage higher than an expected voltage is detected due to the sneak current of the other measurement electrode group. The interval between the measurement electrode groups in which the interference between the applied currents occurs can be derived by a current distribution analysis, with the electric resistance and size of hot metal, molten slag, and the carbon brick as inputs. FIG. 3 is a diagram illustrating an example of a current distribution analysis result. In the current distribution analysis, current density in the carbon bricks when a current is caused to flow through the measurement electrode groups installed at the measurement positions is calculated. FIG. 3 illustrates a result of mapping the magnitude of the current density to a top view of the shaft furnace, and shows a result in which the closer a location is to black color the larger the current density is. As illustrated in FIG. 3, in the current distribution analysis, the current density increases within a range of ±15° around a certain measurement position of a measurement electrode group through which the current is caused to flow. In other words, when an interval between the measurement positions is smaller than ±15°, current applied to an adjacent measurement electrode group sneaks through the carbon bricks and flows into an adjacent measurement electrode group. Therefore, in the present embodiment, when an interval between measurement positions of any two sets of measurement electrode groups is smaller than the interval between the measurement electrode groups where the applied currents interfere with each other, derived by the current distribution analysis, a signal switching device 22 installed between the current generators 12 and the signal generation device 21 shifts the timing of outputting the signal to the current generators 12, between the measurement positions so that while the signal is being output to a certain measurement position, the signal switching device 22 does not output the signal to another measurement position. In other words, during application of a current to a certain measurement electrode group, the current is not applied to another measurement electrode group. This configuration makes it possible to suppress the over-detection of the voltage, enabling accurate measurement of the melt level at each of the measurement positions even when the melt level is measured at the plurality of the measurement positions specified in the circumferential direction of the furnace. Here, since the sneak current does not occur between measurement electrode groups located at measurement positions at an interval wider than the interval where the interference between the applied currents occurs, it is acceptable that the current may be applied to the other measurement electrode group for measurement simultaneously with the measurement electrode group to which the current is being applied. This configuration makes it possible to reduce a time required for the measurement in all the measurement electrode groups, thus enabling reduction of a time interval between melt level measurements and closer management of the melt level.

Each of the current generators 12 applies a current to the current application electrodes 10a and 10b according to the rectangular wave signal or the pseudo random signal output from the signal switching device 22, and causes a current to flow through the furnace body 1. Then, the recording device 13 measures and records a voltage generated between the voltage detection electrodes 11a and 11b. At this time, the recording device 13 records the current applied by the current generator 12 together with the voltage as a reference signal. Thereafter, the recording device 13 calculates the melt level in the blast furnace on the basis of a recorded voltage value or a change in electric resistance between the voltage detection electrodes 11a and 11b calculated from this value of the voltage. In the lower part of the furnace body **1,** it is considered that the melt level may be locally different due to factors such as a difference in viscosity between hot metal and slag and uneven distribution of center coke in the furnace. Such a deviation in the melt level has a concern about influence on the condition of furnace. In contrast, according to the present embodiment, it is possible to find out a deviation in increase/decrease of the melt level in the circumferential direction of the furnace body 1. For example, if the melt level locally rises excessively, a taphole 1b in the vicinity of a measurement position indicated the rise of the melt level is opened for tapping, enabling a uniform melt level in the circumferential direction.

Note that when the signal output from the signal switching device 22 is the rectangular wave signal, an electric resistance value between the voltage detection electrodes 11a and 11b can be calculated by dividing the voltage value recorded in the recording device 13 by a current value (absolute value of the current is constant) corresponding to each time range. On the other hand, when the signal output from the signal switching device 22 is the pseudo random signal, a cross-correlation between the reference signal and the voltage signal is calculated, a maximum value (correlation maximum) of a cross-correlation waveform is detected, and the maximum value is used as the voltage value. Here, the pseudo random signal is a signal represented by binary values of 0 and 1, but continues to maintain the values within a clock frequency time interval. Therefore, when 0 and 1 of the pseudo random signal are caused to correspond to -1 and +1, respectively, and an amplitude of the current value is A, the current value changes to -A and +A in the same pattern as that of the pseudo random signal. Therefore, dividing an obtained voltage value by the amplitude A of the current value enables calculation of the electric resistance value between the voltage detection electrodes 11a and 11b.

### [Installation positions of electrodes]

Next, the installation positions of the current application electrodes 10a and 10b and the voltage detection electrodes 11a and 11b will be described in detail.

As illustrated in FIG. 1, the current application electrodes 10a and 10b are installed one by one above and below the taphole 1b. Furthermore, when a slag level is measured, it is considered that a hot metal level in the furnace only changes at most approximately several tens of centimeters above the taphole 1b, and therefore, a lower electrode, among two electrodes installed above the taphole 1b, is installed at a position that is always above the hot metal level. Furthermore, for the electrodes installed at other measurement positions, the intervals and installation positions of the electrodes are aligned with each other. This is because comparison of the increase or decrease of the melt level between measurement positions is facilitated. Note that it is known that even if the installation position of the electrode has a deviation of approximately several tens of centimeters in the height direction, the installation position of the electrode does not greatly affect a measurement value. Therefore, it is preferable to match the installation positions of the electrodes to each other with a difference of approximately several tens of centimeters or less. Furthermore, positive electrodes and negative electrodes of the current application electrodes 10a and 10b and the voltage detection electrodes 11a and 11b are arranged in the same order for all the measurement positions.

In order to obtain comparable electric resistance at the measurement positions, it is considered necessary to equalize the number of tiers of carbon bricks (the number of carbon bricks stacked from a furnace bottom) with which the respective electrodes at the same positions at the respective measurement positions make contact. This is because a joint between the carbon bricks has conductivity, but cement having higher electric resistance than the carbon bricks is applied. Furthermore, it is ideal to install the four electrodes on the straight line, but the electrodes may be shifted in a circumferential direction depending on an installation situation of an incidental installation or the like of the blast furnace. However, the shift shall fall within a range in which a shortest flow path of the applied current does not pass through the joint between the carbon bricks in the left-right direction. Actually, allowable deviation amounts in the height direction and allowable deviation amounts in the circumferential direction of these installation positions may be determined from the design drawing of the blast furnace to be measured. Furthermore, installing the electrodes so that the straight lines each formed by the installation positions of the electrodes at one measurement position are parallel facilitates comparison of the measured electric resistance values.

### Example

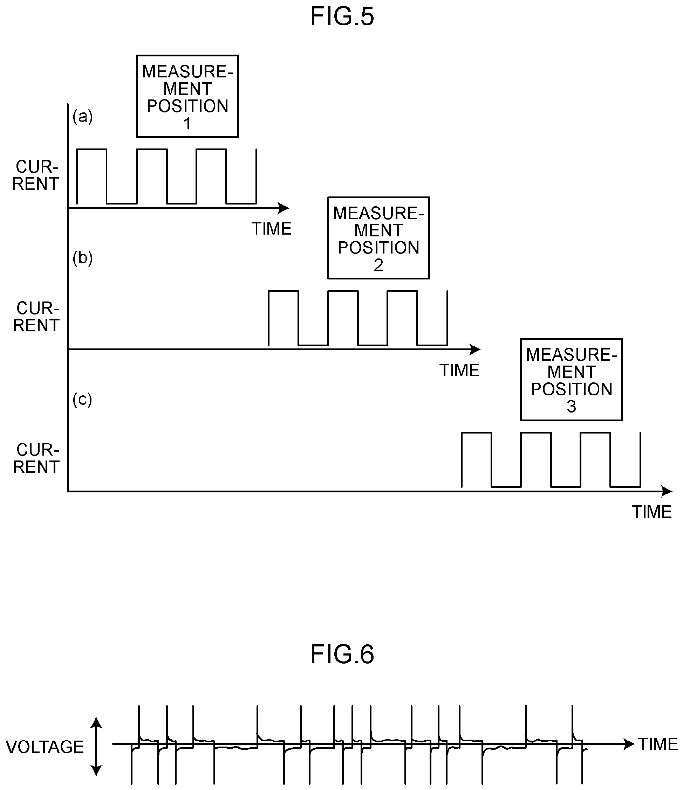

In the present example, the melt level in a blast furnace that has a volume of 5000 m³ and in which four tapholes are installed in the circumferential direction was measured. Specifically, the level of hot metal can be calculated from mass balance, and therefore, measurement was performed for the purpose of detecting a slag level. Furthermore, as illustrated in FIG. 4, the measurement positions for the melt level were four in total, and the melt level was measured by installing the measurement electrode groups in the vicinity of the four tapholes 1b. Then, the pseudo random signal having a code length of 127 and a clock frequency of 6 Hz was supplied to the current application electrodes of the measurement electrode groups with the same temporal change to perform measurement. Furthermore, the current values were each set to 3 A, and as illustrated in FIG. 5, the current was sequentially applied to the current application electrodes of each measurement electrode group by using a current switching device.

A distance between the current application electrodes in each measurement electrode group was 6 m, and an uppermost voltage detection electrode was installed at a position 1 m below an uppermost current application electrode. Furthermore, a lowermost voltage detection electrode was installed 1 m below the uppermost voltage detection electrode. With this height, it is assumed that the voltage detection electrode is always above the level of hot metal. Furthermore, the respective electrodes were installed on a straight line in the height direction of the blast furnace. However, two voltage detection electrodes at certain measurement positions were installed so as to be shifted rightward by approximately 200 mm relative to the straight line, because there was piping of the incidental installation. Note that each of the carbon bricks constituting the furnace body has a cross-section of 600 mm square, and the shortest flow path of the current does not pass through the joint. The tip of each electrode was brought into contact with a surface of a corresponding exposed carbon brick. Furthermore, the electrodes at all the measurement positions were installed at the same height position.

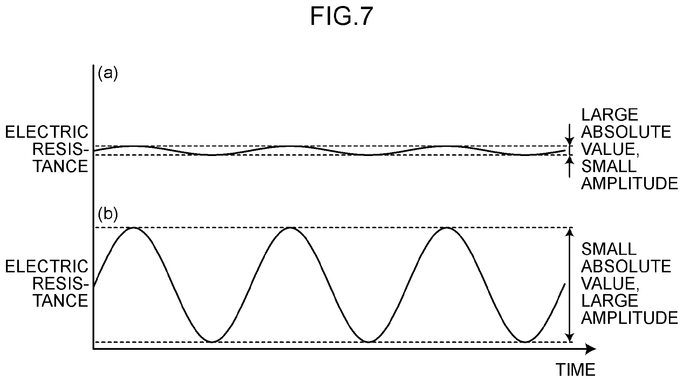

FIG. 6 illustrates an exemplary detected voltage waveform at a measurement position. Over-detection of voltage was not shown in the detected voltage waveform, and it was confirmed that expected voltage was measured. A change in electric resistance when current control of the present invention was performed and when the current control was not performed is illustrated in FIGS. 7(a) and (b). As illustrated in FIG. 7(a), when the current control of the present invention was not performed, an amount of flowing current was increased, an absolute value of the electric resistance was increased and the amplitude was reduced, and therefore, the tendency of the change in electric resistance was reduced. In contrast, as illustrated in FIG. 7(b), when the current control of the present invention was performed, an amount of flowing current had an expected value, the absolute value of the electric resistance was reduced and the amplitude was increased, and therefore, the tendency of the change in electric resistance was able to be clearly observed. Therefore, according to the present invention, it was confirmed that the melt level can be accurately measured at each measurement position even when the melt level is measured at the plurality of the measurement positions in the circumferential direction of the blast furnace.

Although the embodiments to which the invention made by the present inventors are applied have been described above, the present invention is not limited to the descriptions and drawings constituting part of the disclosure of the present invention according to the present embodiment. In other words, other embodiments, examples, operations and techniques, and the like made by those skilled in the art and the like on the basis of the present embodiment are all included in the scope of the present invention.

### Industrial Applicability

According to the present invention, even when the plurality of measurement electrode groups are installed in a circumferential direction of the furnace to measure the melt level, it is possible to provide the measurement method and the measurement apparatus for a melt level in a shaft furnace that enable accurate measurement of the melt level by using each of the plurality of measurement electrode groups.

### Reference Signs List

- 1: FURNACE BODY
- 1a: THROAT
- 1b: TAPHOLE
- 10a, 10b: CURRENT APPLICATION ELECTRODE
- 11a, 11b: VOLTAGE DETECTION ELECTRODE
- 12: CURRENT GENERATOR
- 13: RECORDING DEVICE
- 21: SIGNAL GENERATION DEVICE
- 22: SIGNAL SWITCHING DEVICE

## Claims

1. A measurement method for a melt level in a shaft furnace, the method comprising
installing a plurality of measurement electrode groups each including at least four electrodes arranged in a height direction of a shaft furnace, in a circumferential direction of the shaft furnace; in each of the measurement electrode groups, applying a current to uppermost and lowermost two electrodes as current application electrodes, and measuring a voltage generated between at least two electrodes excluding the current application electrodes as voltage detection electrodes; and measuring a melt level in the circumferential direction in the shaft furnace by using the measured voltage or a change in electric resistance calculated from the voltage,
wherein during application of a current to a certain measurement electrode group, a current is not applied to another measurement electrode group.

2. The measurement method for a melt level in a shaft furnace according to claim 1, wherein a rectangular wave signal or a pseudo random signal is used as a current signal to be applied to each of the current application electrodes.

3. The measurement method for a melt level in a shaft furnace according to claim 1 or 2, wherein a measurement electrode group to which a current is not applied is located within a range of a predetermined distance from a measurement electrode group to which a current is applied.

4. The measurement method for a melt level in a shaft furnace according to claim 3, wherein the predetermined distance is determined by a current distribution analysis.

5. The measurement method for a melt level in a shaft furnace according to claim 3 or 4, wherein a current is applied to a measurement electrode group located at a position whose distance is larger than the predetermined distance, simultaneously with the measurement electrode group to which a current is applied.

6. A measurement apparatus for a melt level in a shaft furnace, the apparatus comprising a plurality of measurement electrode groups that are installed in a circumferential direction of the shaft furnace, and each of which includes at least four electrodes arranged in a height direction of a shaft furnace, the apparatus, for each of the measurement electrode groups, applying a current to uppermost and lowermost two electrodes as current application electrodes and measuring a voltage generated between at least two electrodes excluding the current application electrodes as voltage detection electrodes, and measuring a melt level in the circumferential direction in the shaft furnace by using the measured voltage or a change in electric resistance calculated from the voltage,
wherein during application of a current to a certain measurement electrode group, a current is not applied to another measurement electrode group.

7. The measurement apparatus for a melt level in a shaft furnace according to claim 6, wherein a rectangular wave signal or a pseudo random signal is used as a current signal to be applied to each of the current application electrodes.
